Europäisches Patentamt

European Patent Office

Office européen des brevets

(11) Publication number: **0 317 532**
**A1**

## EUROPEAN PATENT APPLICATION

(21) Application number: 88850352.1

(22) Date of filing: 19.10.88

(51) Int. Cl.4: **B 01 D 46/42**

(30) Priority: 16.11.87 SE 8704489

(43) Date of publication of application:
24.05.89 Bulletin 89/21

(84) Designated Contracting States: **DE FR GB IT NL**

(71) Applicant: **AKTIEBOLAGET ELECTROLUX**
**Luxbacken 1**
**S-105 45 Stockholm (SE)**

(72) Inventor: **Kilström, Lars Gunnar**
**Näsby Allé 49**
**S-183 30 Täby (SE)**

**Tuvin, Lars Gunnar**
**Plommonvägen 2**
**S-7410 00 Kista (SE)**

**Svanberg, Joakim Axel**
**Bolmensvägen 20**
**S-121 64 Johanneshov (SE)**

(74) Representative: **Hagelbäck, Evert Isidor et al**
**c/o AB Electrolux Corporate Patents & Trademarks**
**S-105 45 Stockholm (SE)**

(54) Pressure indicator.

(57) A device for indicating a pressure difference comprises a piston adapted to be adjusted between a first and a second position against the action of a resilient force, when the pressure difference reaches a predetermined value. The piston (14) is movable in a conical cylinder (12) and provided with a piston-rod (14a) extending through an opening at the narrow end of the cylinder and having an area actuated by the pressure difference, said area being dimensioned to start the adjustment when said value is reached.

Fig.1

EP 0 317 532 A1

## Description

### Pressure indicator

The present invention relates to a device for indicating a pressure difference, comprising a piston adapted to be adjusted between a first and a second position against the action of a resilient force, when the pressure difference reaches a predetermined value.

Devices of this kind are used for indicating the clogging of a filter, such as an exhaust filter of a vacuum cleaner. As the filter becomes clogged, the pressure drop across the same will increase, and when the pressure drop has reached a predetermined level the device gives a signal indicating that the filter should be replaced by a new one. The replacement of the exhaust filter in due time contributes to maintaining the suction power of the vacuum cleaner.

The object of the invention is to provide a pressure indicator which gives a clear and distinct signal and has a good functional reliability and a simple construction and which can also be manufactured at a low cost. This has been achieved by means of a device of the kind mentioned in the inroduction which is generally characterized in that the piston is movable in a conical cylinder and provided with a piston-rod extending through an opening at the narrow end of the cylinder and having an area actuated by the pressure difference, said area being dimensioned to start the adjustment when said value is reached.

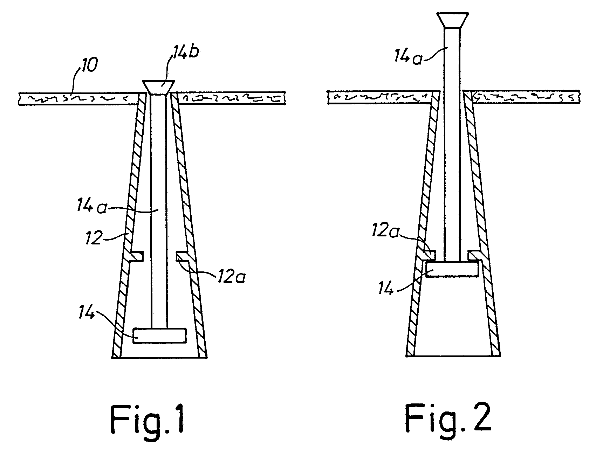

The invention will be described in more detail below with reference to the accompanying drawing on which Figs. 1 and 2 illustrate a preferred embodiment of the indicator according to the invention in longitudinal section and in two different positions.

On the drawing there is illustrated a filter 10 which might, for instance, be an exhaust filter of a vacuum cleaner. An air current flows upwards through the filter whereby a pressure difference prevails across the filter between the overpressure on its bottom side and the atmospheric pressure on its top side. The pressure difference depends on the degree of clogging of the filter.

A conical cylinder 12 is arranged with its narrow end in an opening of the filter 10. In cylinder 12 a piston 14 is arranged which is vertically movable between the positions shown in Fig. 1 and Fig. 2. The piston 14 is suspended on a piston-rod 14a extending through the upper end of cylinder 12 and having a conical extension 14b at its free end.

In the normal position illustrated in Fig. 2 the conical extension 14b of the piston-rod 14a functions as a valve means sealingly engaging the upper end of cylinder 12. In that position there is consequently no air flow through the cylinder.

The mass of the piston and the piston-rod is adapted to the cross-section area of the piston-rod so that the gravity acting on these parts, at a predetermined pressure difference across the filter, is balanced by the upwards lifting force acting on said cross-section area. When this pressure difference is exceeded owing to the clogging of the filter, the piston and piston-rod move upwards from the position in Fig. 1, whereby a gap is opened between the piston-rod and the upper end of the cylinder 12. This results in an air flow through the cylinder which creates an upward force on the piston 14. This force increases as the piston moves upwards and the gap between the piston and the inner wall of the conical cylinder decreases. Therefore, once the piston has begun to move upwards, a rapid adjustment to the position illustrated in Fig. 2 occurs.

Owing to the described function a distinct indication of the clogging of the filter is obtained and this is easily noticeable in that the upper end of the piston-rod protudes above the filter 10.

In order to prevent the piston 14 from jamming against the conical cylinder wall the cylinder is provided with internal stops 12a which the piston abuts in its upper end position.

It is, of course, not necessary to provide the incidator in an opening of the filter as shown in the above-mentioned embodiment and it can be mounted in an arbitrary way as long as it is actuated by the current pressure difference. It need neither be arranged vertically, as illustrated above, but may take other angular positions. The gravity on the piston, utilized in the example, can in such a case be replaced by the resilient force of a spring.

### Claims

1. Device for indicating a pressure difference, comprising a piston (14) adapted to be adjusted between a first and a second position against the action of a resilient force, when the pressure difference reaches a predetermined value, **characterized** in that the piston (14) is movable in a conical cylinder (12) and provided with a piston-rod (14a) extending through an opening at the narrow end of the cylinder and having an area actuated by the pressure difference, said area being dimensioned to start the adjustment when said value is reached.

2. Device according to claim 1, **characterized** in that the free end of the piston-rod (14a) is provided with a sealing means (14b) which closes the narrow end of the cylinder in said first position.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-1 260 808 (LAUTRETTE & CIE)<br>* Whole document *<br>--- | 1 | B 01 D 4⊂/42 |
| A | FR-A-2 421 660 (EUROGEST S.A.R.L.)<br>* Claim 1; figures 1,2 *<br>--- | 1 | |
| A | US-A-3 024 655 (F.W, DWYER)<br>* Claim 1; figures 2,3 * ·<br>----- | 1 | |

| | |
|---|---|
| | TECHNICAL FIELDS SEARCHED (Int. Cl.4) |
| | B 01 D 46/00 |

The present search report has been drawn up for all claims

| Place of search | Date of completion of the search | Examiner |
|---|---|---|
| THE HAGUE | 20-02-1989 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P0401)